# FASCICULE DE BREVET EUROPEEN

(11) **EP 2 272 155 B1**
(45) Date de publication et mention de la délivrance du brevet: **15.02.2012**
(21) Numéro de dépôt: 09738357.4
(22) Date de dépôt: 24.04.2009
(51) Int. Cl.: H02K 9/22, F25B 21/00, H02K 9/00, H02K 1/06, H02K 1/32, H02K 41/03

(54) **MOTEUR ELECTRIQUE**
ELEKTROMOTOR
ELECTRIC MOTOR

(30) Priorité: 28.04.2008 FR 0802368
(43) Date de publication de la demande: 12.01.2011
(73) Titulaire: Cooltech Applications S.A.S., 67810 Holtzheim (FR)
(72) Inventeur: HEITZLER, Jean-Claude, F-68180 Horbourg WIHR (FR); MULLER, Christian, F-67000 Strasbourg (FR)
(74) Mandataire: Nithardt, Roland
(86) Numéro de dépôt international: PCT/FR2009/000485
(87) Numéro de publication internationale: WO 2009/133323

(56) Documents cités:
- WO-A1-03/016794
- DE-A1- 4 128 362
- US-A1- 2005 120 720
- THORSTEN K. ET AL: "Inverse magnetocaloric effect in ferromagnetic Ni?Mn?Sn alloys" NATURE MATERIALS, [Online] vol. 4, 15 mai 2005 (2005-05-15), pages 450-454, XP002561175 Extrait de l'Internet: URL:http://www.nature.com/nmat/journal/v4/ n6/pdf/nmat1395.pdf> [extrait le 2009-12-18]

## Description

### Domaine technique :

La présente invention concerne un moteur électrique comportant un stator fixe et un équipement mobile par rapport audit stator, ledit stator comportant au moins deux bobinages électriques montés sur une armature fixe et ledit équipement mobile portant un arrangement magnétique, lesdits bobinages électriques étant alimentés électriquement pour générer un champ magnétique, et ledit arrangement magnétique étant agencé pour créer des lignes de champ qui coopèrent avec ledit champ magnétique pour provoquer le déplacement dudit équipement mobile par rapport audit stator.

### Technique antérieure :

Lorsque les moteurs électriques sont soumis à des contraintes ou à des variations de vitesse, ils subissent des échauffements qui doivent être contrôlés afin que leur efficacité soit aussi proche que possible d'un rendement optimal. A cet effet, les moteurs électriques actuels comportent généralement un ventilateur à pales rotatives qui est monté sur l'arbre du moteur et qui communique avec l'extérieur à travers une grille ménagée dans la carcasse de ce moteur. Pour de très grosses installations, des systèmes de refroidissement à air ou à eau plus sophistiqués peuvent être utilisés.

Néanmoins, toutes les solutions actuelles présentent le défaut de ne pas être en mesure de capter les calories au coeur du moteur et de n'assurer que le refroidissement plus ou moins périphérique de la carcasse. De ce fait, l'efficacité du refroidissement reste faible.

On connaît la demande de brevet US 2005/120720 décrivant un générateur magnétocalorique ayant pour objet de générer de la puissance thermique. Le générateur thermique décrit dans cette demande ne concerne toutefois pas un moteur et n'aborde pas le problème du refroidissement d'un moteur.

### Exposé de l'invention :

La présente invention se propose d'améliorer cette efficacité en remplaçant ou en complétant les moyens de refroidissement classiques des moteurs électriques par un dispositif qui intervient sélectivement lorsque sa température atteint un niveau déterminé et qui permet de capter les calories à éliminer au coeur même de ce moteur.

Ce but est atteint par le dispositif de l'invention, tel que défini en préambule, caractérisé en ce que l'armature dudit stator contient au moins un élément en matériau magnétocalorique inverse agencé pour contribuer au refroidissement dudit moteur électrique.

Selon une première variante dans laquelle le moteur est du type rotatif, comportant une carcasse périphérique, un stator logé dans cette carcasse et ledit équipement mobile étant constitué d'un rotor monté coaxialement à l'intérieur dudit stator, ledit rotor comportant un ensemble de bobinages électriques monté sur une armature, ladite armature peut avantageusement contenir au moins un élément en matériau magnétocalorique inverse.

Selon une autre réalisation d'un moteur rotatif dans laquelle ledit rotor comporte un ensemble d'aimants permanents, lesdits aimants permanents sont avantageusement séparés par des éléments contenant au moins un matériau magnétocalorique inverse.

D'une manière préférentielle, lesdits éléments qui séparent lesdits aimants permanents sont des pièces creuses agencées pour permettre le passage d'un fluide de refroidissement.

Selon un autre mode de réalisation, le moteur est linéaire et comporte une carcasse allongé, un stator linéaire logé dans cette carcasse, ledit équipement mobile est constitué d'un chariot mobile en translation monté parallèlement audit stator et portant ledit arrangement magnétique, ledit arrangement magnétique dudit chariot mobile comportant un ensemble d'aimants permanents, lesdits aimants sont avantageusement montés sur des noyaux contenant au moins un matériau magnétocalorique inverse.

Selon une deuxième variante, ledit arrangement magnétique dudit chariot mobile comporte un ensemble d'électroaimants et lesdits électroaimants comportent des bobinages électriques montés sur des armatures, lesdites armatures comportant avantageusement au moins un élément en matériau magnétocalorique inverse.

En outre, le moteur électrique selon l'invention peut également comporter au moins un élément en matériau magnétocalorique apte à préchauffer le moteur dans sa phase de démarrage.

### Description sommaire des dessins :

La présente invention et ses avantages apparaîtront mieux dans la description suivante de plusieurs modes de réalisation, donnés à titre d'exemples non limitatifs en référence aux dessins annexés, dans lesquels :
- la figure 1A est une vue en coupe d'une première forme de réalisation du moteur électrique de l'invention, du type rotatif,
- la figure 1B est une vue en élévation du moteur électrique de la figure 1A, sans sa carcasse,
- la figure 1C est une vue extérieure du moteur électrique de la figure 1A,
- la figure 1D est une vue agrandie coupée d'une partie du rotor du moteur électrique de la figure 1A,
- la figure 1E est une vue agrandie coupée d'une partie du stator du moteur électrique de la figure 1A,
- la figure 2A est une vue en coupe d'une deuxième forme de réalisation du moteur électrique de l'invention, sans sa carcasse périphérique,
- la figure 2B est une vue en élévation du moteur électrique de la figure 2A,
- la figure 2C est une vue extérieure du moteur électrique des figures 2A et 2B,
- la figure 3A est une vue en élévation d'une première forme de réalisation d'un moteur linéaire selon l'invention,
- la figure 3B est une vue partielle en coupe illustrant des composants essentiels du moteur linéaire de la figure 3A,
- la figure 4A est une vue en élévation d'une deuxième forme de réalisation d'un moteur linéaire selon l'invention, et
- la figure 4B est une vue partielle en coupe illustrant des composants essentiels du moteur linéaire de la figure 4A.

### Différentes manières de réaliser l'invention :

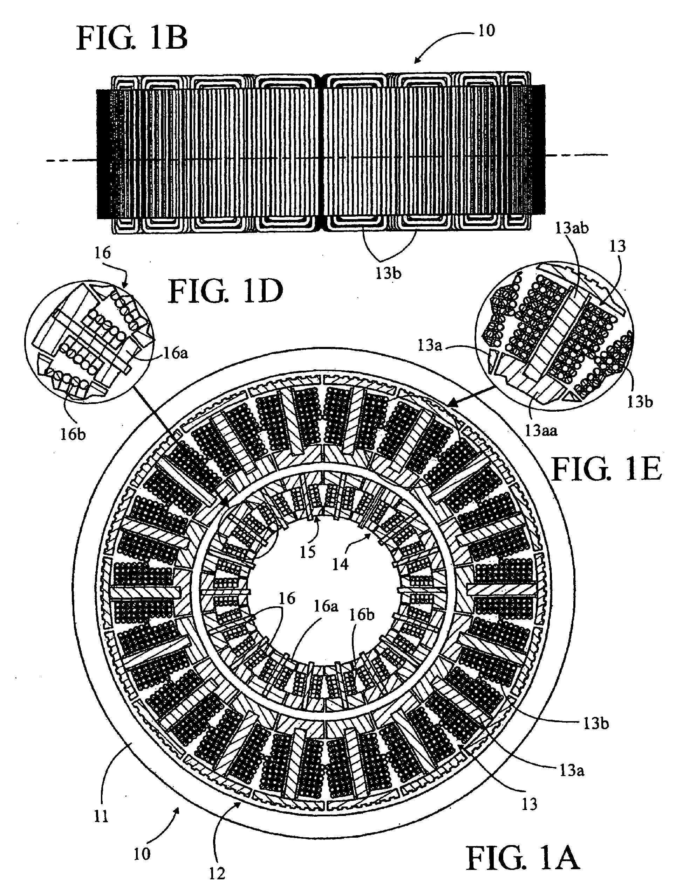

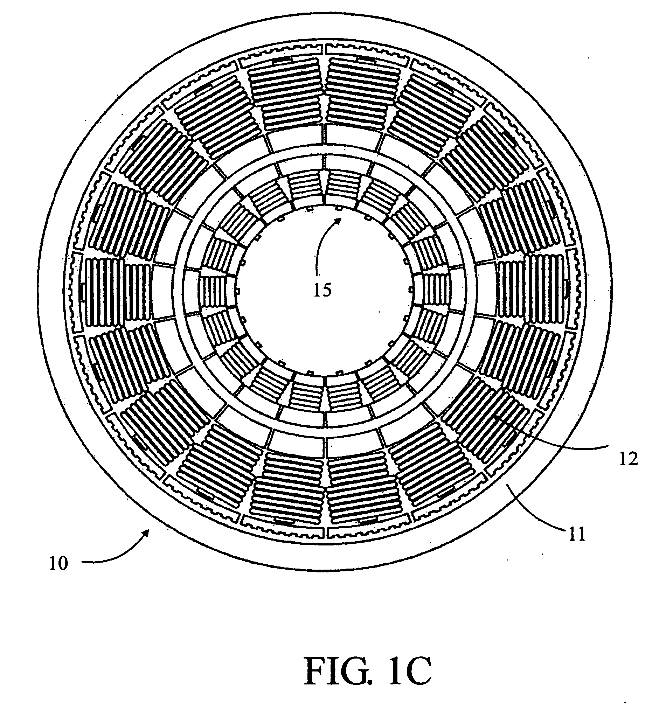

En référence aux figures 1A, 1B et 1C, le moteur électrique 10 représenté, du type rotatif, comporte une carcasse périphérique circulaire 11 à l'intérieur de laquelle est monté un stator 12 comportant un certain nombre de bobinages électriques 13 comportant chacun une armature 13a et un enroulement de fils conducteurs 13b, monté sur ladite armature 13a. Le moteur électrique 10 comporte par ailleurs un équipement mobile 14 par rapport audit stator, cet équipement mobile étant dans ce cas un rotor 15 disposé coaxialement par rapport audit stator 12. Le rotor 15 comporte, dans l'exemple représenté, un ensemble de bobinages électriques 16 comprenant chacun une armature 16a et un enroulement de fils conducteurs 16b. Les bobinages électriques 16 sont des électroaimants qui sont montés sur une structure portante (non représentée) du rotor 15.

L'armature 13a des bobinages électriques 13 est constituée d'une pièce de base 13aa en forme de segment linéaire ou de secteur circulaire et d'une branche 13ab, perpendiculaire par rapport à la pièce de base 13aa (cf. fig. 1 E). La branche 13ab au moins, de l'armature 13a, comporte au moins un matériau magnétocalorique dit inverse, dont l'effet bien connu est respectivement de s'échauffer ou de se refroidir lorsqu'il entre dans une zone où règne un champ magnétique, à une température donnée dite température active proche du point de Curie, pour le matériau magnétocalorique concerné. La pièce de base 13aa peut elle aussi comporter un ou plusieurs matériaux magnétocaloriques ayant le même effet. Ces éléments qui sont disposés au coeur du moteur électrique, dans la zone proche des enroulements de fils conducteurs 13b des bobinages électriques 13 permettent de capter des calories et de les évacuer en maintenant la température du moteur à une valeur optimale. Ce moyen de refroidissement remplace ou complète les moyens de ventilation par air ou les moyens de refroidissement par circuit de liquide connus de certains moteurs électriques. Il a l'avantage d'agir à proximité immédiate de la source d'échauffement, à savoir les enroulements des bobinages qui s'échauffent par effet Joule au moment où ils sont parcourus par un courant électrique et surtout au moment où l'appel en courant électrique se fait plus fort en raison d'une accélération du moteur ou quand il est soumis à des contraintes.

On notera que l'effet magnétocalorique ne se déclenche qu'à proximité d'une température déterminée, appelée température de Curie, qui est liée à la nature du matériau magnétocalorique. Les matériaux dits magnétocaloriques classiques ont pour effet de s'échauffer quasi instantanément lorsqu'ils pénètrent dans un champ magnétique. Les matériaux dits magnétocaloriques inverses ont la particularité de se refroidir quasi instantanément au moment où elles entrent dans un champ magnétique. Dans la présente application, on utilisera de préférence des matériaux magnétocaloriques inverses pour générer des calories « négatives » appelées couramment des frigories. Leur action ne démarrera qu'à une certaine température prédéterminée et ils auront tendance à maintenir le moteur dans une plage de température fixe où son rendement est optimal.

Les armatures 16a des bobinages électriques 16 comprennent chacune une pièce de base 16aa en forme de segment linéaire ou de secteur circulaire et une branche 16ab, perpendiculaire par rapport à la pièce de base 16aa (cf. fig. 1D). Les pièces de base 16aa et/ou les branches perpendiculaires 16ab peuvent comporter un ou plusieurs matériaux magnétocaloriques inverses dans le but de contribuer au refroidissement du rotor 15 du moteur électrique 10.

La carcasse 11 du moteur 10 est de préférence réalisée de manière à augmenter les possibilités d'échange thermique avec l'environnement et d'améliorer la stabilité de la température du moteur.

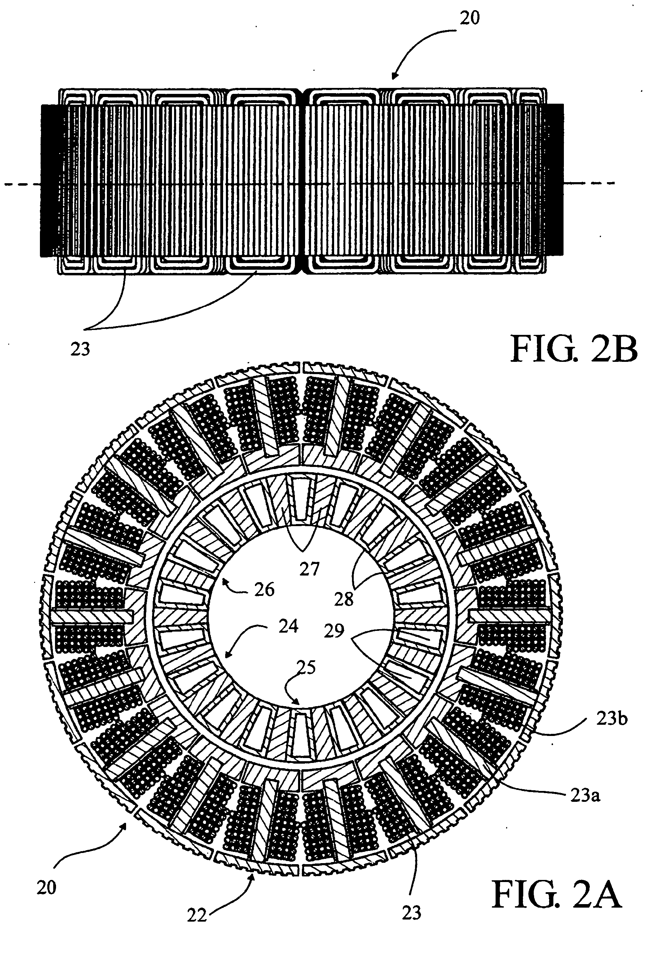

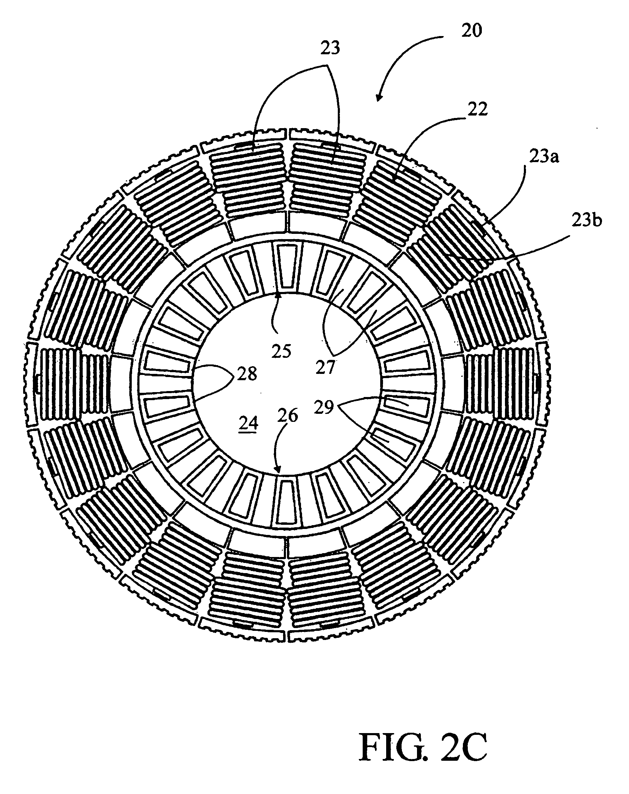

En référence aux figures 2A, 2B et 2C, le moteur électrique 20 représenté, du type rotatif, comporte comme précédemment une carcasse périphérique circulaire (non représentée) à l'intérieur de laquelle est monté un stator 22 comportant un certain nombre de bobinages électriques 23 comportant chacun une armature 23a et un enroulement de fils conducteurs 23b, monté sur ladite armature 23a. Le moteur électrique 20 comporte par ailleurs un équipement mobile 24 par rapport audit stator 22, cet équipement mobile étant dans ce cas un rotor 25 disposé coaxialement par rapport audit stator 22. Le rotor 25 comporte, dans l'exemple représenté, un arrangement magnétique 26 comprenant un ensemble d'aimants permanents 27 séparés par des éléments magnétocaloriques 28 comportant chacun une cavité centrale 29 en vue d'un passage éventuel d'un fluide de refroidissement liquide ou gazeux.

Les différents composants du stator 22 et du rotor 25 ont les mêmes fonctions que celles des composants correspondants du moteur électrique rotatif 10. Les éléments magnétocaloriques ont, comme précédemment pour fonction de réguler la température du moteur en évitant des surchauffes.

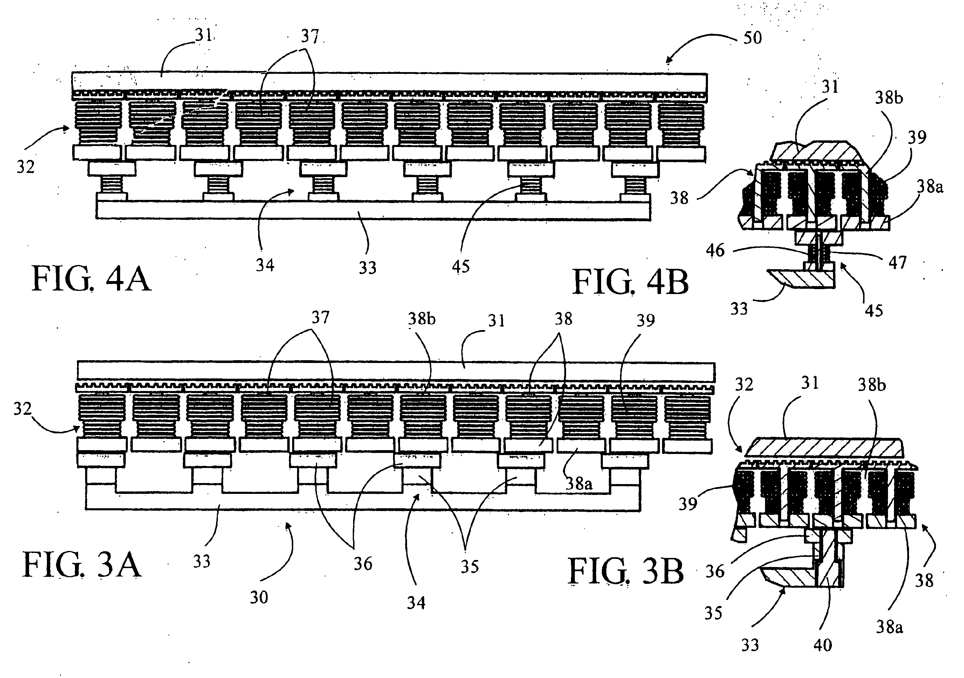

Les figures 3A et 3B correspondent à une forme de réalisation d'un moteur électrique 30 du type linéaire. Le moteur 30 comporte une carcasse allongée 31, un stator linéaire fixe 32 et un chariot 33 mobile alternativement par rapport audit stator linéaire fixe 32 et portant un arrangement magnétique 34, composé dans ce cas d'une série d'aimants permanents 35, associés chacun à un élément 36 magnétiquement perméable. Le stator linéaire fixe 32 est constitué d'un ensemble de bobinages électriques 37 d'axes parallèles et perpendiculaires à la direction de déplacement du chariot 33. Chacun des bobinages électriques 37 comporte une armature 38 et un enroulement de fil conducteur 39. L'armature 38 comprend comme précédemment une pièce de base 38a en forme de segment linéaire et une branche 38b, perpendiculaire par rapport à la pièce de base 38a (cf. fig. 3B). Les pièces de base 38a et/ou les branches perpendiculaires 38b peuvent comporter un ou plusieurs matériaux magnétocaloriques inverses dans le but de contribuer au refroidissement du stator 32 du moteur électrique 30.

Comme le montre plus particulièrement la figure 3B, le chariot mobile 33 qui porte les aimants permanents 35 est pourvu d'un ensemble de noyaux 40 sur lesquels sont montés coaxialement les aimants permanents 35 et réalisés en un matériau magnétocalorique inverse qui peut être identique ou non à celui des armatures 38.

La variante du moteur linéaire 50 représenté par les figures 4A et 4B diffère de celle de la figure 3 en ce que les aimants permanents 35 du chariot mobile 33 sont remplacés par des électroaimants 45 ayant une armature ou noyau 46 entouré d'un bobinage 47 et réalisé en un matériau magnétocalorique inverse. Les autres composants sont identiques à ceux de la variante précédente.

Bien que cela ne soit pas représenté dans les figures annexées, le moteur 10, 20, 30, 50 selon l'invention peut également comporter au moins un élément en matériau magnétocalorique, éventuellement monté sur le stator, à proximité ou non des éléments en matériau magnétocalorique inverse. L'intégration d'un tel élément magnétocalorique permet de réaliser un préchauffage du moteur lors de son démarrage. Dans ce but, la plage de température active ou plage de fonctionnement dudit élément en matériau magnétocalorique est choisie de telle sorte que la température maximale est proche ou égale à la température optimale du moteur. Lorsque cette température est atteinte, ledit élément en matériau magnétocalorique sera inactif et n'aura plus d'effet magnétocalorique sous l'action d'un champ magnétique.

Grâce à l'invention, il est possible de réaliser un moteur 10, 20, 30, 50 qui comporte un moyen de préchauffage intégré sous la forme d'au moins un élément en matériau magnétocalorique et/ou un moyen de refroidissement intégré sous la forme d'au moins un élément en matériau magnétocalorique inverse.

### Possibilités d'application industrielle :

La présente invention n'est pas limitée aux exemples de réalisation décrits, mais s'étend à toute modification et variante évidentes pour un homme du métier tout en restant dans l'étendue de la protection définie dans les revendications annexées. Le nombre des aimants qui composent l'arrangement magnétique, leur forme et leur disposition peuvent être modifiés en fonction des objectifs recherchés en matière de rendement, d'encombrement, de vitesse de rotation du rotor etc. Le nombre des bobinages électriques peut également varier selon les objectifs à atteindre. La nature des matériaux, notamment des matériaux magnétocaloriques inverses, et celle des autres composants tels que la carcasse du dispositif peuvent être modifiés selon les besoins.

## Revendications

1. Moteur électrique (10, 20, 30, 50) comportant un stator fixe (12, 22, 32) et un équipement mobile (14, 24, 33) par rapport audit stator, ledit stator comportant au moins deux bobinages électriques (13, 23, 37) montés sur une armature fixe (13a, 23a, 38) et ledit équipement mobile portant un arrangement magnétique, lesdits bobinages électriques étant alimentés électriquement pour générer un champ magnétique, et ledit arrangement magnétique étant agencé pour créer des lignes de champ qui coopèrent avec ledit champ magnétique pour provoquer le déplacement dudit équipement mobile par rapport audit stator, **caractérisé en ce que** la dite armature (13a, 23a, 38) dudit stator (12, 22, 32) contient au moins un élément en matériau magnétocalorique inverse agencé pour contribuer au refroidissement dudit moteur électrique.

2. Moteur électrique selon la revendication 1, du type moteur rotatif, comportant une carcasse périphérique (11), un stator (12) logé dans cette carcasse et ledit équipement mobile étant constitué d'un rotor (15) monté coaxialement à l'intérieur dudit stator, ledit rotor (15) comportant un ensemble de bobinages électriques (16) monté sur une armature (16a), **caractérisé en ce que** ladite armature (16a) contient au moins un élément en matériau magnétocalorique inverse.

3. Moteur électrique selon la revendication 1, du type moteur rotatif, comportant une carcasse périphérique, un stator (22) logé dans cette carcasse et ledit équipement mobile étant constitué d'un rotor (25) monté coaxialement à l'intérieur dudit stator, ledit rotor (25) comportant un ensemble d'aimants permanents (27), **caractérisé en ce que** lesdits aimants permanents sont séparés par des éléments (28) contenant au moins un matériau magnétocalorique inverse.

4. Moteur électrique selon la revendication 3, **caractérisé en ce que** lesdits éléments magnétocaloriques (28) qui séparent lesdits aimants permanents (27) sont des pièces creuses agencées pour permettre le passage d'un fluide de refroidissement.

5. Moteur électrique selon la revendication 1, du type moteur linéaire, comportant une carcasse allongée, un stator linéaire (32) logé dans cette carcasse et ledit équipement mobile étant constitué d'un chariot mobile en translation (33) monté parallèlement audit stator et portant ledit arrangement magnétique (34), ledit arrangement magnétique (34) dudit chariot mobile (33) comportant un ensemble d'aimants permanents (35), **caractérisé en ce que** lesdits aimants permanents (35) sont montés sur des noyaux (40) contenant au moins un matériau magnétocalorique inverse.

6. Dispositif selon la revendication 1, du type moteur linéaire, comportant une carcasse allongée, un stator linéaire (32) logé dans cette carcasse et ledit équipement mobile étant constitué d'un chariot mobile en translation (33) monté parallèlement audit stator et portant ledit arrangement magnétique (34), ledit arrangement magnétique (34) dudit chariot mobile (33) comportant un ensemble d'électroaimants (45) pourvu de bobinages électriques (47) montés sur des armatures (46), **caractérisé en ce que** lesdites armatures (46) comportent au moins un élément en matériau magnétocalorique inverse.

7. Moteur électrique, selon l'une quelconque des revendications 1 à 6, **caractérisé en ce qu'**il comporte, en outre, au moins un élément en matériau magnétocalorique apte à préchauffer le moteur dans sa phase de démarrage.

## Claims

1. Electric motor (10, 20, 30, 50) comprising a fixed stator (12, 22, 32) and an equipment (14, 24, 33) which is mobile in relation to the said stator, the said stator comprising at least two electric coils (13, 23, 37) mounted on a fixed armature (13a, 23a, 38) and the said mobile equipment supporting a magnetic arrangement, the said electric coils being energized electrically so as to generate a magnetic field, and the said magnetic arrangement being arranged so as to create magnetic field lines that cooperate with the said magnetic field to bring about the movement of the said mobile equipment in relation to the said stator, **characterized in that** the said armature (13a, 23a, 38) of the said stator (12, 22, 32) comprises at least one element out of reverse magnetocaloric material arranged so as to contribute to the cooling of the said electric motor.

2. Electric motor according to claim 1, of the rotary motor type, comprising a peripheral frame (11), a stator (12) housed in this frame and the said mobile equipment being made of a rotor (15) mounted coaxially inside of the said stator, the said rotor (15) comprising a set of electric coils (16) mounted on an armature (16a), **characterized in that** the said armature (16a) comprises at least one element out of reverse magnetocaloric material.

3. Electric motor according to claim 1, of the rotary motor type, comprising a peripheral frame, a stator (22) housed in this frame and the said mobile equipment being made of a rotor (25) mounted coaxially inside of the said stator, the said rotor (25) comprising a set of permanent magnets (27), **characterized in that** the said permanent magnets are separated by elements (28) comprising at least one reverse magnetocaloric material.

4. Electric motor according to claim 3, **characterized in that** the said magnetocaloric elements (28), which separate the said permanent magnets (27), are hollow parts arranged in order to allow the passage of a cooling fluid.

5. Electric motor according to claim 1, of the linear motor type, comprising an elongated frame, a linear stator (32) housed in this frame, the said mobile equipment is made of a carriage mobile in translation (33) mounted parallel to the said stator and supporting the said magnetic arrangement (34), the said magnetic arrangement (34) of the said mobile carriage (33) comprising a set of permanent magnets (35), **characterized in that** the said permanent magnets (35) are mounted on cores (40) containing at least one reverse magnetocaloric material.

6. Device according to claim 1, of the linear motor type, comprising an elongated frame, a linear stator (32) housed in this frame, the said mobile equipment is made of a carriage mobile in translation (33) mounted parallel to the said stator and supporting the said magnetic arrangement (34), the said magnetic arrangement (34) of the said mobile carriage (33) comprising a set of electromagnets (45) comprising electric coils (47) mounted on armatures (46), **characterized in that** the said armatures (46) comprise at least one element out of reverse magnetocaloric material.

7. Electric motor according to any of the claims 1 to 6, **characterized in that** it comprises moreover at least one element out of magnetocaloric material capable of preheating the motor in its starting phase.

## Patentansprüche

1. Elektromotor (10, 20, 30, 50) bestehend aus einem feststehenden Stator (12, 22, 32) und einer in Bezug auf den besagten Stator beweglichen Einrichtung (14, 24, 33), wobei der besagte Stator mindestens zwei auf einer feststehenden Armatur (13a, 23a, 38) montierte elektrische Wicklungen (13, 23, 37) beträgt und wobei die besagte bewegliche Einrichtung eine magnetische Anordnung trägt, wobei die besagten elektrischen Wicklungen elektrisch gespeist werden, um ein Magnetfeld zu erzeugen, und wobei die besagte magnetische Anordnung ausgelegt ist, um Feldlinien zu erzeugen, die mit dem besagten Magnetfeld zusammenwirken, um die Bewegung der besagten beweglichen Einrichtung in Bezug auf den besagten Stator zu bewirken, **dadurch gekennzeichnet, dass** die besagte Armatur (13a, 23a, 38) des besagten Stators (12, 22, 32) mindestens ein Element aus magnetokalorischem Material mit umgekehrtem magnetokalorischem Effekt beträgt, das angeordnet ist, um zur Kühlung des besagte Elektromotors beizutragen.

2. Elektromotor nach Anspruch 1, des Typs Rotationsmotor, bestehend aus einem peripherischen Gehäuse (11), einem in diesem Gehäuse untergebrachten Stator (12) und wobei die besagte bewegliche Einrichtung aus einem koaxial in dem besagten Stator montierten Rotor (15) besteht, wobei der besagte Rotor (15) einen auf eine Armatur (16a) montierten Satz elektrischer Wicklungen (16) beträgt, **dadurch gekennzeichnet, dass** die besagte Armatur (16a) mindestens ein Element aus magnetokalorischem Material mit umgekehrtem magnetokalorischem Effekt enthält.

3. Elektromotor nach Anspruch 1, des Typs Rotationsmotor, bestehend aus einem peripherischen Gehäuse, einem in diesem Gehäuse untergebrachten Stator (22) und wobei die besagte bewegliche Einrichtung aus einem koaxial in dem besagten Stator montierten Rotor (25) besteht, wobei der besagte Rotor (25) einen Satz Permanentmagnete (27) beträgt, **dadurch gekennzeichnet, dass** die besagten Permanentmagnete durch Elemente (28) getrennt sind, die mindestens ein Element aus magnetokalorischem Material mit umgekehrtem magnetokalorischem Effekt enthalten.

4. Elektromotor nach Anspruch 3, **dadurch gekennzeichnet, dass** die besagten magnetokalorischen Elemente (28), die die besagten Permanentmagnete (27) trennen, hohle Teile sind, die angeordnet sind, um den Durchfluss eines Kühlmediums zu ermöglichen.

5. Elektromotor nach Anspruch 1, des Type Linearmotor, bestehend aus einem länglichen Gehäuse, einem in diesem Gehäuse untergebrachten Linearstator (32) und wobei die besagte bewegliche Einrichtung aus einem parallel zum besagten Stator montierten, in Translation beweglichen Schlitten (33) besteht, der die besagte magnetische Anordnung (34) trägt, wobei die besagte magnetische Anordnung (34) des besagten beweglichen Schlittens (33) einen Satz Permanentmagnete (35) beträgt, **dadurch gekennzeichnet, dass** die besagten Permanentmagnete (35) auf Kerne (40) montiert sind, die mindestens ein Element aus magnetokalorischem Material mit umgekehrtem magnetokalorischem Effekt betragen.

6. Vorrichtung nach Anspruch 1, des Type Linearmotor, bestehend aus einem länglichen Gehäuse, einem in diesem Gehäuse untergebrachten Linearstator (32) und wobei die besagte bewegliche Einrichtung aus einem parallel zum besagten Stator montierten, in Translation beweglichen Schlitten (33) besteht, der die besagte magnetische Anordnung (34) trägt, wobei die besagte magnetische Anordnung (34) des besagten beweglichen Schlittens (33) einen Satz Permanentmagnete (45) mit auf Armaturen (46) montierte elektrische Wicklungen (47) beträgt, **dadurch gekennzeichnet, dass** die besagten Armaturen (46) mindestens ein Element aus magnetokalorischem Material mit umgekehrtem magnetokalorischem Effekt betragen.

7. Elektromotor nach irgendwelchem der Ansprüche 1 bis 6, **dadurch gekennzeichnet, dass** er außerdem mindestens ein Element aus magnetokalorischem Material beträgt, das in der Lage ist, den Motor während seiner Anlaufphase vorzuwärmen.
